# EUROPEAN PATENT SPECIFICATION

(11) **EP 0 331 299 B1**
(45) Date of publication and mention of the grant of the patent: **07.01.1993**
(21) Application number: 89301243.5
(22) Date of filing: 09.02.1989
(51) Int. Cl.: B60N 2/26

(54) **Child's safety seat**
Kinder-Sicherheitssitz
Siège de sécurité pour enfant

(30) Priority: 25.02.1988 GB 8804469
(43) Date of publication of application: 06.09.1989
(73) Proprietor: BRITAX RÖMER Kindersicherheit GmbH, D-89077 Ulm (DE)
(72) Inventor: Wetter, Hermann, D-7900 Ulm (DE); Stysch, Christian, D-7900 Ulm (DE)
(74) Representative: Hollinghurst, Antony

(56) References cited:
- DE-A- 2 205 859
- DE-U- 8 804 020
- FR-A- 2 548 983
- FR-A- 2 596 338

## Description

This invention relates to a child's safety seat for use in a motor vehicle, of the type comprising a seat body and a base member pivotally coupled to the seat body and adapted to rest on the seat portion of the vehicle seat so as to support the seat body out of contact with the seat portion of the vehicle seat as the seat body pivots between an upright position and an inclined position, the seat body having a seat portion, a backrest portion and an element extending rearwardly from the backrest portion and defining an opening for receiving an adult seat belt, the rear edge of said opening being of arcuate shape and the seat body being movable between its upright position and its reclined position without unfastening such adult seat belt.

A child's seat of this type is disclosed in US-A-3 948 556. The element defining the opening for the adult seat belt is part of a support frame on which the seat body is pivotally mounted and relative to which the seat body reclines. This has the result that crash loads are transmitted from the seat body to the adult seat belt via the support frame and the various pivot joints.

According to the invention in a safety seat of the foregoing type, the member extending rearwardly from the backrest portion comprises a flange secured to the backrest portion, and the rear edge of the opening in said flange being of arcuate shape such that, when a rear edge of the flange is in contact with the backrest portion of the vehicle seat, the shortest distance between the rear edge of the opening and the bottom anchorages for the adult seat belt remains substantially constant as the seat body is moved between its upright position and its reclined position.

Preferably the base member has a handle at its front end.

Manually releaseable locking means may be provided for resisting relative angular movement between the seat body and the base member.

An embodiment of the invention will now be described, by way of example, with reference to the accompanying drawing, in which:
Figure 1 is a side view of a child safety seat in accordance with the invention, positioned in its upright position on a vehicle seat;
Figure 2 is a side view, similar to Figure 1, but showing the child seat in its reclined position; and Figure 3 is a sectional view taken on the line 3 - 3 in Figure 1, but with the vehicle seat omitted.

As can be seen from the drawings, a vehicle seat comprises a seat portion 10 and a back rest portion 12. An adult seat belt 14 is secured to anchorages 15 and projects through a gap between the seat portion 10 and the back rest portion 12.

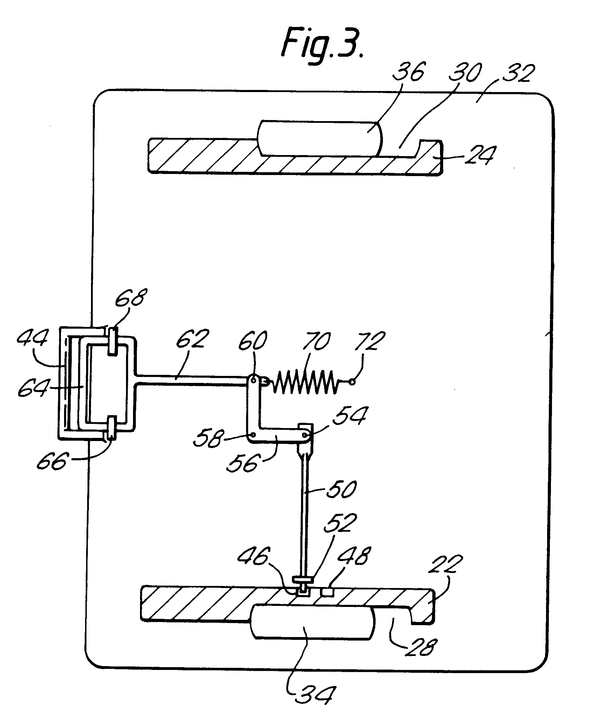

A child's safety seat in accordance with the invention comprises a seat body 16 having a seat portion 18 and a back rest portion 20, together with a pair of side flanges 22 and 24 (Figure 3), each of which is secured to a respective side edge of both the seat portion 18 and the back rest portion 20 so as to project both forwardly/upwardly and rearwardly/downwardly therefrom. The forward/upward part of each flange 22, 24 serves to form a conventional armrest and head support wing on each side of the seat body 16. The rearwardly/downwardly projecting part of each of the flanges 22, 24 has an opening 26 behind the backrest 22, and a V-shaped recess 28, 30 in its outer face, below the seat portion 18.

A base member 32 rests on the seat portion 10 of the vehicle seat and has a pair of upwardly projecting V-shaped brackets 34, 36, each of which engages in the V-shaped recess 28, 30 in a respective one of the flanges 22, 24. The recesses 28, 30 are wider than the brackets 34, 36 by an amount chosen to permit the required range of relative angular movement between the upright position and the reclined position of the seat body 16. The brackets 34, 36 are connected to the seat body 16 by pivot pins 38, which engage in oversize holes so that, in normal use, the seat body 16 is supported on the base member 32 by engagement of the top edge of each bracket 34, 36 with the abutting edge of the corresponding recess 28, 30. The pivot pins 38 merely serve to keep the seat body 16 and the base member 32 interconnected when the vehicle seat belt 14 is unfastened.

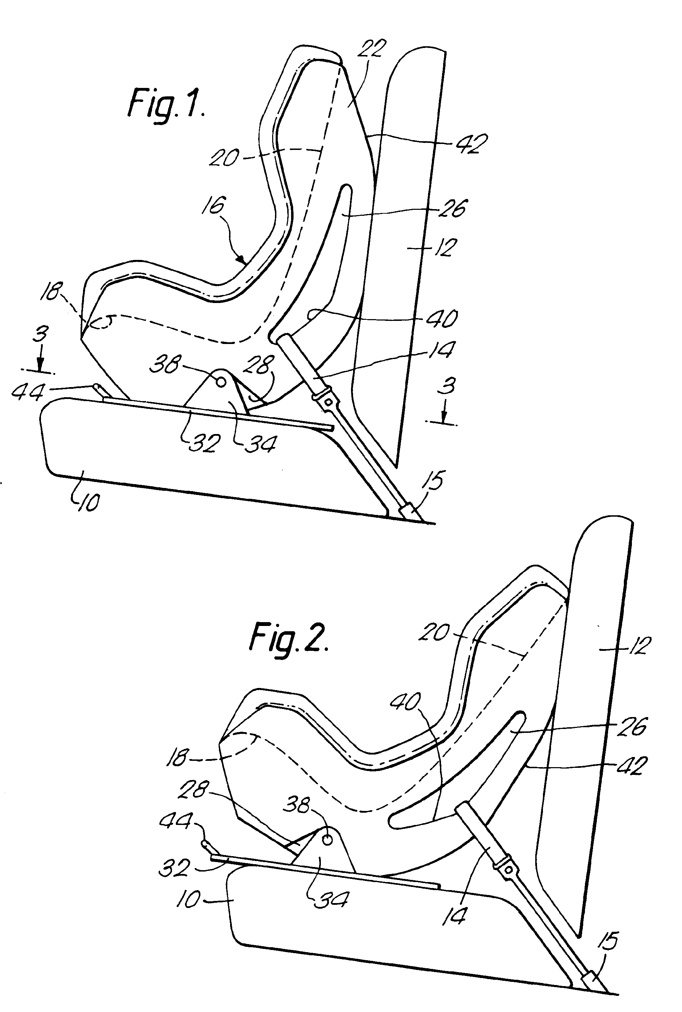

In accordance with the invention, the rear edge of each of the openings 26 in the flanges 22, 24 includes an arcuate portion 40 which is shaped and positioned so that the length of the seat belt 14 can remain unaltered as the seat body 16 moves between its upright position shown in Figure 1 and its reclined position shown in Figure 2, provided that the rear edges 42 of the flanges 22, 24 remain in contact with the front face of the vehicle seat back 12. It is therefore possible to move the seat body 16 between its two positions without disturbing a sleeping occupant of the child's seat. A handle 44 is provided on the front of the base member 32 to facilitate this movement.

Referring particularly to Figure 3, the side flange 22 on the seat occupant's left hand side has a pair of blind holes 46 and 48 in its inner side face opposite to the recess 28 and below the pivot pin 38. A locking rod 50 is slidably mounted in a bracket 52 on the base member 32 so that one end thereof its movable into the front hole 46 when the seat body 16 is in its upright position, as shown in Figures 1 and 3, and into the rear hole 48 when the seat body 16 is in its reclined position, as shown in Figure 2. The other end of the rod 50 is connected by a pivot pin 54 to one end of a bell-crank lever 56 which is mounted on a pivot pin 58 secured to the base member 32. The other end of the bell-crank lever 56 is coupled by a pivot pin 60 to the rear end of an actuating rod 62 which has a hand grip 64 on its front end. The hand grip 64 is mounted in guide brackets 66 and 68 so as to be positioned closely behind the handle 44 on the base member 32. A tension spring 70, connected between the rear end of the actuating rod 62 and an anchorage 72 on the base member 32, biases the locking rod 50 into one or other of the holes 46 and 48. Squeezing the hand grip 64 against the handle 44 displaces the locking rod 50 out of the hole 46, 48 in which it is engaged, allowing the seat body 16 to pivot between its upright position and its reclined position.

A conventional child's harness is provided for retaining a child occupant in the child's seat body 16 but, since this forms no part of the invention, it is not illustrated.

## Claims

1. A child's safety seat for use in a motor vehicle, comprising a seat body (16) and a base member (32) pivotally coupled to the seat body (16) and adapted to rest on the seat portion (10) of the vehicle seat so as to support the seat body (16) out of contact with the seat portion (10) of the vehicle seat as the seat body (16) pivots between an upright position and an inclined position, the seat body (16) having a seat portion (18), a backrest portion (20) and an element (22, 24) extending rearwardly from the backrest portion (20) and defining an opening (26) for receiving an adult seat belt (14), the rear edge (40) of said opening (26) being of arcuate shape and the seat body (16) being movable between its upright position and its reclined position without unfastening such adult seat belt (14), characterised in that the member extending rearwardly from the backrest portion (20) comprises a flange (22, 24) secured to the backrest portion (20), and the rear edge (40) of the opening (26) in said flange (22, 24) being of arcuate shape such that, when a rear edge (42) of the flange (22, 24) is in contact with the backrest portion (12) of the vehicle seat, the shortest distance between the rear edge (40) of the opening (26) and the bottom anchorages for the adult seat belt (14) remains substantially constant as the seat body (16) is moved between its upright position and its reclined position.

2. A child's safety seat according to claim 1, wherein said respective flange (22, 24) extends rearwardly from each side of the backrest portion (20) of the seat body (16), each flange (22, 24) having an opening (26) with a rear edge (40) of said arcuate shape.

3. A child's safety seat according to claim 2, wherein said rearwardly extending flange (22, 24) also has a downwardly extending portion projecting from the seat portion (18) of the seat body (16) and connected to the base member (32) by pivotal couplings (38).

4. A child's safety seat according to any preceding claim, wherein the base member (32) has a handle (44) at its front end.

5. A child's safety seat according to any preceding claim, wherein manually releaseable locking means (50-64) are provided for resisting relative angular movement between the seat body (16) and the base member (32).

## Patentansprüche

1. Kinder-Sicherheitssitz für ein Kraftfahrzeug, umfassend: einen Sitzkörper (16) und ein verschwenkbar mit dem Sitzkörper (16) gekoppeltes Basisteil (32), welches auf dem Sitzteil (7) eines Fahrzeugsitzes aufliegen kann, um den Sitzkörper (16) ohne Kontakt mit dem Sitzteil (10) des Fahrzeugsitzes abzustützen, wenn der Sitzkörper (16) zwischen einer aufrechten Stellung und einer geneigten Stellung verschwenkt wird, wobei der Sitzkörper (16) einen Sitzteil (18), einen Rückenlehnenteil (20) und ein sich von dem Rückenlehnenteil (20) nach hinten erstreckendes Element (22, 24), welches eine Öffnung (26) zur Aufnahme eines Erwachsenen-Sicherheitsgurtes (4) definiert, auf- weist, die Hinterkante (40) der Öffnung (26) eine bogenförmige Ausformung besitzt und der Sitzkörper (16) zwischen seiner aufrechten Stellung und seiner geneigten Stellung bewegbar ist, ohne den Erwachsenen-Sicherheitsgurt (14) zu lösen, **dadurch gekennzeichnet**, daß das sich von dem Rückenlehnenteil (20) nach hinten erstreckende Element einen an dem Rückenlehnenteil (20) festgelegten Flansch (22, 24) aufweist und die Hinterkante (40) der Öffnung (26) in dem Flansch (22, 24) eine bogenförmige Ausformung besitzt, so daß, wenn eine Hinterkante (42) des Flansches (22, 24) in Berührung mit dem Rückenlehnenteil (12) des Fahrzeugsitzes steht, der kürzeste Abstand zwischen der Hinterkante (40) der Öffnung (26) und den Bodenverankerungen für den Erwachsenen-Sicherheitsgurt (14) im wesentlichen konstant bleibt, wenn der Sitzkörper (16) zwischen seiner aufrechten Stellung und seiner zurückgelehnten Stellung bewegt wird.

2. Kinder-Sicherheitsgurt nach Anspruch 1, bei dem sich der jeweilige Flansch (22, 24) von jeder Seite des Rückenlehnenteils (20) des Sitzkörpers (16) nach hinten erstreckt, wobei jeder Flansch (22, 24) eine Öffnung (26) mit einer Hinterkante (40) der bogenförmigen Ausformung aufweist.

3. Kinder-Sicherheitssitz nach Anspruch 2, bei dem der sich nach hinten erstreckende Flansch (22, 24) außerdem einen von dem Sitzteil (18) des Sitzkörpers (16) vorstehenden, sich nach unten erstreckenden Abschnitt aufweist, der über Schwenkverbindungen (38) mit dem Basisteil (32) verbunden ist.

4. Kinder-Sicherheitssitz nach irgendeinem vorhergehenden Anspruch, bei dem das Basisteil (22) an seinem vorderen Ende einen Handgriff (44) aufweist.

5. Kinder-Sicherheitssitz nach irgendeinem vorhergehenden Anspruch, bei dem eine von Hand lösbare Verriegelungseinrichtung (50 - 64) vorgesehen ist, die eine Relativ-Winkelbewegung zwischen dem Sitzkörper (16) und dem Basisteil (32) verhindert.

## Revendications

1. Un siège de sécurité pour enfant, à utiliser dans un véhicule à moteur, comprenant un corps de siège (16) et un élément de base (32) accouplé à pivotement au corps de siège (16) et apte à reposer sur la partie de siège (10) du siège du véhicule de façon à supporter le corps de siège (16) hors de contact avec la partie de siège (10) du siège du véhicule lorsque le corps de siège (16) pivote entre une position dressée et une position inclinée, le corps de siège (16) ayant une partie de siège (18), une partie de dossier (20) et un élément (22, 24) s'étendant vers l'arrière à partir de la partie de dossier (20) et définissant une ouverture (26) pour recevoir une ceinture (14) de siège d'adulte, le bord arrière (40) de ladite ouverture (26) étant de forme incurvée et le corps de siège (16) étant mobile entre sa position dressée et sa position inclinée sans détacher ladite ceinture (14) de siège d'adulte, caractérisé en ce que l'élément s'étendant vers l'arrière à partir de la partie (20) de dossier comprend un flasque (22, 24) fixé à la partie de dossier (20) et le bord arrière (40) de l'ouverture (26) dans ledit flasque (22, 24) étant de forme incurvée d'une telle manière que, lorsqu'un bord arrière (42) du flasque (22, 24) est en contact avec la partie de dossier (12) du siège de véhicule, la distance la plus courte entre le bord arrière (40) de l'ouverture (26) et les ancrages inférieurs de la ceinture (14) de siège d'adulte reste sensiblement constante lorsque le corps de siège (16) est déplacé entre sa position dressée et sa position inclinée.

2. Un siège de sécurité pour enfant selon la revendication 1, dans lequel ledit flasque respectif (22, 24) s'étend vers l'arrière à partir de chaque côté de la partie de dossier (20) du corps de siège (16), chaque flasque (22, 24) comprenant une ouverture (26) dont le bord arrière (40) est de forme incurvée.

3. Un siège de sécurité pour enfant selon la revendication 2, dans lequel ledit flasque s'étendant vers l'arrière (22, 24) comprend également une partie s'étendant vers le bas en saillie à partir de la partie (18) de siège du corps de siège (16) et reliée à l'élément d'embase (32) par des accouplements pivotants (38).

4. Un siège de sécurité pour enfant selon une revendication précédente quelconque, dans lequel l'élément d'embase(32) comporte une poignée (44) à son extrémité avant.

5. Un siège de sécurité pour enfant selon une revendication précédente quelconque dans lequel des moyens de verrouillage libérables à la main (50-64) sont prévus pour résister à un déplacement angulaire relatif entre le corps de siège (16) et l'élément d'embase (32).
